# EUROPEAN PATENT SPECIFICATION

(11) **EP 2 421 355 B1**
(45) Date of publication and mention of the grant of the patent: **20.02.2013**
(21) Application number: 10714378.6
(22) Date of filing: 20.04.2010
(51) Int. Cl.: A01J 25/11

(54) **CHEESE MAKING APPARATUS WITH VERTICAL DRAINING COLUMN**
KÄSEHERSTELLUNGSVORRICHTUNG MIT VERTIKALER ENTWÄSSERUNGSKOLONNE
APPAREIL DE FABRICATION DE FROMAGE À COLONNE D'ÉGOUTTAGE VERTICALE

(30) Priority: 21.04.2009 NL 2002771
(43) Date of publication of application: 29.02.2012
(73) Proprietor: Tetra Laval Holdings & Finance S.A., 1009 Pully (CH)
(72) Inventor: SPIJKERMAN, Harrie, NL-8191 LP Wapenveld (NL)
(74) Representative: Jaeger, Olav
(86) International application number: PCT/NL2010/050204
(87) International publication number: WO 2010/123348

(56) References cited:
- EP-A1- 0 367 353
- WO-A1-94/06304
- NL-A- 8 006 898

## Description

The invention relates to an apparatus for making cheese, see e.g. document EP-A-0 367 353 comprising at least one vertical tubular draining column for receiving cheese curd, which in operation forms a curd column in the draining column, and which draining column is placed on a sump with a dosing device therein and has at least one perforated section, which, together with a jacket enclosing the respective section for operatively collecting whey egressing from the curd column, forms a draining section, wherein each draining section is provided with at least one whey discharge pipe. The invention further relates to a method for operating an apparatus for making cheese.

In the cheese production process, in a known manner, curd is prepared from milk in a curd maker. Usually, in the curd maker the curd is cut and stirred and the whey thereby released is partly discharged and for the rest is supplied, together with the curd mass, to an apparatus for producing blocks of cheese. Although cheese can be prepared from curd in many ways, in large-scale cheese production often use is made of so-called prepressing columns. Such a column can comprise one or more hollow vertical tubes, to which, in operation, a mixture of curd and whey is supplied at the top. In each tube, the curd is increasingly compacted from the top down, forming a curd column, so that at the bottom of the column curd blocks can be cut off. To this end, at the bottom of the column, a horizontally acting guillotine blade is placed. The guillotine blade closes off the column and the tube(s) placed therein, but is opened periodically, so that the curd column(s) in the tube(s) can move down over a settable distance. When thereupon the guillotine blade is brought into the closing position again, at the bottom of each curd column a curd block (or multiple curd blocks) is thereby cut off. The thus obtained curd blocks can then be processed further.

A curd column hence moves stepwise in downward direction through a vertical hollow tube. The curd is thereby compressed under the influence of the column's own weight and through the hydraulic action of the whey stream flowing through the curd bed.

This is called draining and compacting, which requires the whey from the curd-whey mixture to be discharged.

To this end, the vertical hollow tube is provided with a number of perforated sections. At those sections, which, if more than one perforated section is present, are mostly, though not necessarily, spaced apart in a vertical sense, the column comprises drainage jackets enclosing the perforated sections. The drainage jackets collect the whey egressing through the openings of the perforated sections and are each provided with at least one discharge pipe for the discharge of whey.

The whey thus obtained is supplied via the discharge pipes to a whey receiving tank and can then be processed further.

The vertical draining column rests on a sump, in which a dosing device, also called forming device, is situated, of which the guillotine blade is a part, and in which the cut-off blocks are received in a mold or cassette and are supplied to a discharge conveyor. In the sump, during operation, fouling occurs due to remaining curd and curd fines (hereinafter jointly referred to as curd particles). Curd fines are small curd particles smaller than 1 mm that can precipitate from the whey streams being released. Curd particles remaining behind in the sump are removed by flushing with water of high quality, that is, pure water suitable for human consumption. A problem of the use of water for flushing the sump is that the whey released in the sump is thereby diluted. The water flushed into the sump needs to be separated from the whey again in subsequent whey processing, which, however, entails costs. The use of a high-quality flushing water naturally entails costs as well. Not flushing the sump as an alternative would lead to rapid fouling of the sump with curd particles and result in outgrowth of microorganisms which contaminate the whey streams released. Such contaminated whey is no longer, or less well, useful for high-grade processing and results in lower-grade yield. Also, there is a risk of the curd blocks thereby getting infected, so that a lower-grade cheese with a lower yield is obtained. Another alternative sometimes used comprises flushing the sump with whey originating from elsewhere, that is, from a location situated at or beyond the usual whey collecting tank. This, however, leads to disadvantages in whey processing in that whey takes up air upon spraying and may start to foam. In addition, the functionality of the spraying device is adversely affected by internal fouling with curd fine particles in the whey. To remove this accumulation of curd fines from the spraying means, flushing is done, partly with flushing water. Moreover, this whey from elsewhere often is not of perfect quality and in turn constitutes a risk of contamination.

The object of the invention is to obviate the problem outlined. To this end, according to the invention (see claim 1), a cheese making apparatus of the abovedescribed kind is characterized in that at least one whey discharge pipe of a draining section is connected with the sump for operatively supplying fresh whey to the sump, which fresh whey is used as flushing liquid for the sump. In this way, the frequency of sprayings with flushing water can be kept to a minimum, and it is only necessary to flush little-fouled wall parts incidentally, the chief purpose being to rinse off whey residues. To this end, during production, a water flushing may be carried out incidentally, for instance for 10 seconds every 30 minutes, via the CIP spraying devices normally already present.

A method for operating an apparatus for making cheese, which apparatus comprises at least one draining column for receiving cheese curd, placed on a sump, wherein the draining column is provided with a number of draining sections for draining whey from the cheese curd, is characterized, according to the invention (see claim 6), in that at least a part of the whey obtained in the draining sections is supplied as flushing liquid to the sump.

In the following, the invention will be further described with reference to the appended drawing.
Fig. 1 schematically shows an example of a known traditional vertical curd draining apparatus;
Fig. 2 schematically shows an exemplary embodiment of a curd draining apparatus according to the invention.

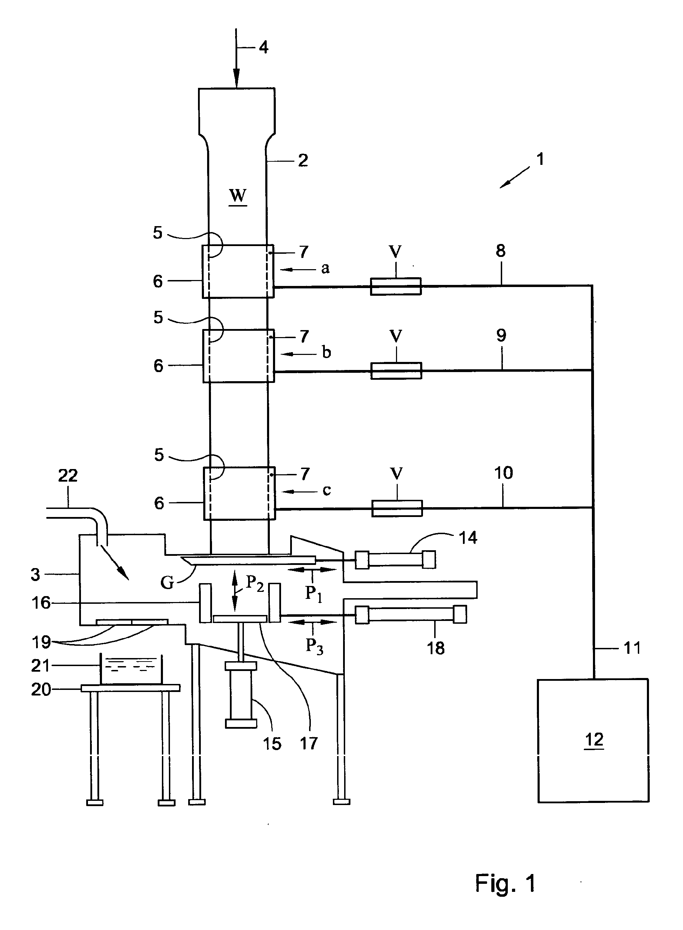

Fig. 1 schematically shows an example of a known traditional curd draining apparatus 1, also called draining column for short. The apparatus shown is of the type marketed by applicant under the name of Tetra Tebel Casomatic^{®} SC. However, the invention is also applicable with other types of draining columns, such as for instance other apparatuses from the Tetra Tebel Casomatic^{®} family, and the apparatus shown is configured for, in continuous operation, draining whey from a vertical curd column W and producing curd blocks using a dosing device. Typically, a cheese making apparatus comprises multiple draining columns.

The curd column W is situated in a draining column 2, which substantially consists of a vertical tube, which rests on a sump 3 and which in a known manner is closed off at the lower end with a guillotine blade G, which is part of a dosing device situated in the sump. At the top of the draining column, in operation, using curd supply means not shown but schematically indicated with an arrow 4, a mixture of whey and curd is supplied to the upper end, funnel-shaped in this example, of the draining column 2. The whey-curd mixture supplied forms a curd column W in the draining column, which has at least one perforated wall part 5. The curd column contains whey, which can egress through the perforated wall or perforated wall parts 5. The perforated wall parts 5 are each enclosed by a closed outer jacket 6, in each case with an interspace 7 between the perforated wall parts and the outer jackets. The perforated wall parts may be cylindrical tube sections, which are circumferentially provided with perforations. Other cross-sectional shapes, such as for instance rectangular or square shapes, are also possible. These tube sections are also referred to as draining sections. In the example shown, three draining sections a, b, and c are present. Each draining section is provided with a whey discharge pipe 8, 9, and 10, respectively. The whey discharge pipes 8, 9, 10 in this example terminate in a common whey discharge pipe 11, which in turn terminates in a whey collecting tank 12. Further, in the pipes 8, 9, and 10, controllable valves V are arranged, which, under the control of pressure gauges, not shown, which measure the hydrostatic pressure in the draining sections a, b, and c, can regulate the flow of the whey through the pipes 8, 9, 10.

Fig. 1 further shows an operating cylinder 14, which can cause the guillotine blade 4 to move back and forth, following a path indicated by an arrow P1. Further shown is a vertical dosing cylinder 15, which carries a platform 17 movable up and down (arrow P2) in a mold 16, which, with the guillotine blade opened, can receive the curd column W and allow it to descend over a desired distance, so that a curd block of the desired height can be cut off. A cut-off curd block is then, while in the mold 16, moved aside (arrow P3) using a cylinder 18, to a position above sluice plates 19. The sluice plates 19 can be opened, so that the curd block can fall into a cheese vat 21 situated under the sluice plates 19 on a conveying device 20.

The sump 3, besides being provided with a CIP (cleaning in place) system, not shown, is also provided with a flushing system, which is schematically indicated at 22. The flushing system comprises sprayers, not shown, arranged at suitable positions, via which a flushing liquid is spouted into the sump. As flushing liquid, flushing water of high quality is used. Also, in part, whey is sometimes used as flushing liquid, which whey then comes from elsewhere, that is, from a location situated at or beyond the whey collecting tank 12.

A problem of the sump cleaning method with water is that the flushing water supplied mixes with the whey still being released in the sump, so that the whey is diluted. The water subsequently needs to be separated from the whey again. This last requires additional costs and sometimes an additional process step.

Furthermore, a problem is that the flushing water in itself constitutes a potential source of a contamination, so that it is necessary to control the quality of the water very well.

Spraying with whey entails the disadvantage of air being beaten into the whey, which may pose whey processing problems. The curd fines in the whey foul the spraying device, which in turn then needs to be regularly flushed with flushing water. Also, spraying with whey entails the disadvantage of whey being distributed to non-fouled places as well.

Not carrying out flushings, by contrast, entails a strong limitation of the operating cycle of the curd draining apparatus due to accumulation of curd residues and attendant outgrowth of microorganisms which contaminate the whey and curd blocks.

These problems can be obviated, according to the invention, by using as a flushing liquid not a liquid coming from elsewhere but applying the whey coming from the draining column itself as a directed flushing liquid for the sump, such that the whey stream in its natural flow entrains all occurring curd residues to the whey discharge in the sump.

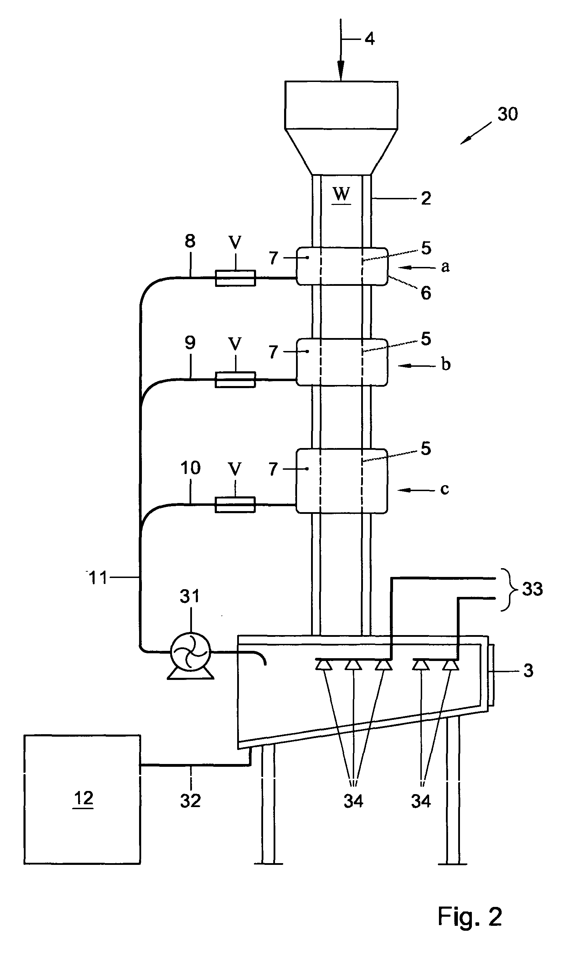

Fig. 2 schematically shows an example of a cheese making apparatus according to the invention. The cheese making apparatus shown is of a similar type to the apparatus shown in Fig. 1 and for corresponding parts the same reference numerals as in Fig. 1 are used. In Fig. 2, the elements situated in the sump and also shown in Fig. 1, such as the guillotine blade, the dosing platform, the mold and the sluice plates, as well as the various operating cylinders, have been omitted for simplicity, but these or similar elements can in reality be present.

The curd draining apparatus 30 shown in Fig. 2 is different from the apparatus shown in Fig. 1 in that whey discharge pipes 8, 9 and 10 of the draining sections a, b and c are not connected via the common whey discharge pipe 11 with a whey collecting tank 12. The whey discharge pipe 11 in the apparatus 30 of Fig. 2 terminates in the sump 3. Accordingly, the whey coming from the draining sections is supplied directly to the sump 3 and, in accordance with the invention, is used as flushing liquid for the sump. It is noted that it is not requisite to use a common whey discharge pipe 11. It is also possible to have one or more individual whey discharge pipes 8, 9, 10 of the draining sections a, b, c terminate directly in the sump 3. This makes it possible to distribute these partial streams over different parts of the sump.

Furthermore, Fig. 2 schematically shows a conventional CIP system 33 with sprayers 34 in the sump 3. Such a system is also present in the apparatus of Fig. 1, but is not shown there.

As the draining sections are situated higher than the sump, the whey, under the influence of gravity, flows into the sump with force. If desired, however, also a pump may be used, as shown in Fig. 2 at 31. Although in the apparatus shown a pump 31 does not seem necessary, the use of a pump 31 may be very useful or actually necessary in other configurations of a curd draining apparatus than shown.

In the exemplary embodiment of Fig. 2, the sump is connected via a pipe 32 with a whey collecting tank 12, so that the whey coming from the draining sections can flow via the sump, together with the whey being released in the sump itself, to the whey collecting tank.

Alternatively, however, it is also possible to make the sump of such design that it can itself be used as a whey collecting tank. In the use of the invention, accordingly, a separate whey collecting tank is no longer necessary because all whey streams already run via the sump. The pipe 32 or a similar pipe can then serve as discharge pipe to supply the whey directly to a whey processing apparatus.

The use of whey coming from the draining sections as flushing liquid for the sump provides many advantages.

First of all, it is no longer necessary for large amounts of flushing liquid to be brought in from elsewhere, since the whey from the draining sections is available in sufficient amounts and moreover is very fresh and hence of good quality.

In addition, sump flushing is now carried out continuously instead of intermittently, which prevents an accumulation of curd.

Furthermore, the whey in the sump is no longer diluted with a foreign flushing liquid, so that it is not necessary for the whey from the sump to be separated from the foreign flushing liquid again.

Flushing the sump with whey further provides an advantage regarding the deaeration of the whey in that the whey divides as a thin liquid layer over a large surface and air can simply egress without this being accompanied by foaming. Especially with low-fat types of cheese, the occurrence of foam in the drained whey is a source of outgrowth of microorganisms since the foam is an ideal growth environment for microorganisms, and the foam has a long residence time in the equipment. The occurring foam is typically precipitated by carrying out extra water sprayings, which in turn leads to additional dilution of the whey, with the earlier-mentioned disadvantages.

Also, a saving on base materials is obtained in that no flushing water needs to be used anymore, nor any base materials to improve the quality of the water to be used as flushing water.

It is noted that after the foregoing, various modifications and variants will be clear to those skilled in the art. Thus, it is possible, if so desired, not to pass all whey from the draining sections directly or via a common pipe to the sump. For instance, a part of the whey from the draining sections could still be passed to a collecting tank, while the rest of the whey is used as flushing liquid. Such modifications are understood to fall within the framework of the invention as defined in the appended claims.

## Claims

1. An apparatus (30) for making cheese, comprising at least one vertical tubular draining column (2), for receiving cheese curd, which in operation forms a curd column (W) in the draining column (2), and which draining column (2) is placed on a sump (3) with a dosing device (15-17) therein and has at least one perforated section (5), which, together with a jacket (6) surrounding the respective section for operatively collecting whey egressing from the curd column (W), forms a draining section (a,b,c), wherein each draining section is provided with at least one whey discharge pipe (8,9,10), **characterized in that** at least one whey discharge pipe (8,9,10) of a draining section (a,b,c) is connected with the sump (3) for operatively supplying fresh whey to the sump (3), which fresh whey is used as flushing liquid for the sump.

2. An apparatus (30) according to claim 1, **characterized in that** the sump (3) is provided with a whey discharge pipe (32), which is connected with a whey collecting tank (12).

3. An apparatus (30) according to claim 1, **characterized in that** the sump (3) is designed also as a whey collecting tank (12).

4. An apparatus (30) according to any one of the preceding claims, **characterized in that** the whey discharge pipes (8,9,10) of the draining sections (a,b,c) connected with the sump (3) are connected with the sump (3) via a common pipe (11).

5. An apparatus (30) according to any one of the preceding claims, **characterized in that** the whey discharge pipes connected with the sump are connected with the sump via pump means.

6. A method for operating an apparatus (30) for making cheese, which apparatus comprises at least one draining column (2) for receiving cheese curd which is placed on a sump (3), wherein the draining column (2) is provided with a number of draining sections (a,b,c) for draining whey from the cheese curd, **characterized in that** at least a part of the fresh whey obtained in the draining sections (a,b,c) is supplied directly to the sump (3) as flushing liquid.

## Patentansprüche

1. Käseherstellungsvorrichtung (30) mit mindestens einer vertikalen rohrförmigen Ablaufsäule (2) zur Aufnahme von Käsebruch, bei der sich im Betrieb eine Käsebruchsäule (W) in der Ablaufsäule (2) bildet, wobei die Ablaufsäule (2) auf einem Sammelbehälter (3) mit einer darin befindlichen Dosiervorrichtung (15 - 17) platziert ist und mindestens einen perforierten Abschnitt (5) hat, der zusammen mit einem Mantel (6), der den jeweiligen Abschnitt umgibt, um aus der Käsebruchsäule (W) austretende Molke betriebsmäßig zu sammeln, einen Ablaufabschnitt (a, b, c) bildet, wobei jeder Ablaufabschnitt mit mindestens einem Molkeaustragrohr (8, 9, 10) versehen ist, **dadurch gekennzeichnet, dass** mindestens ein Molkeaustragrohr (8, 9, 10) eines Ablaufabschnitts (a, b, c) mit dem Sammelbehälter (3) verbunden ist, um dem Sammelbehälter (3) betriebsmäßig frische Molke zuzuführen, die als Spülflüssigkeit für den Sammelbehälter verwendet wird.

2. Vorrichtung (30) nach Anspruch 1, **dadurch gekennzeichnet, dass** der Sammelbehälter (3) mit einem Molkeaustragrohr (32) versehen ist, das mit einem Molkesammeltank (12) verbunden ist.

3. Vorrichtung (30) nach Anspruch 1, **dadurch gekennzeichnet, dass** der Sammelbehälter (3) ebenfalls als ein Molkesammeltank (12) ausgelegt ist.

4. Vorrichtung (30) nach einem der vorhergehenden Ansprüche, **dadurch gekennzeichnet, dass** die Molkeaustragrohre (8, 9, 10) der mit dem Sammelbehälter (3) verbundenen Ablaufabschnitte (a, b, c) über ein gemeinsames Rohr (11) mit dem Sammelbehälter (3) verbunden sind.

5. Vorrichtung (30) nach einem der vorhergehenden Ansprüche, **dadurch gekennzeichnet, dass** die mit dem Sammelbehälter verbundenen Molkeaustragrohre über Pumpenmittel mit dem Sammelbehälter verbunden sind.

6. Verfahren zum Betreiben einer Käseherstellungsvorrichtung (30), die mindestens eine Ablaufsäule (2) zur Aufnahme von Käsebruch umfasst, die auf einem Sammelbehälter (3) platziert und mit mehreren Ablaufabschnitten (a, b, c) versehen ist, um Molke aus dem Käsebruch ablaufen zu lassen, **dadurch gekennzeichnet, dass** mindestens ein Teil der in den Ablaufabschnitten (a, b, c) erhaltenen frischen Molke direkt dem Sammelbehälter (3) als Spülflüssigkeit zugeführt wird.

## Revendications

1. Appareil (30) de fabrication de fromage, comprenant au moins une colonne d'égouttage (2) tubulaire verticale pour recevoir du caillé de fromage qui, lors du fonctionnement, forme une colonne de caillé (W) dans la colonne d'égouttage (2), et laquelle colonne d'égouttage (2) est placée sur un bassin (3) à l'intérieur duquel se trouve un dispositif de dosage (15-17) et a au moins une section perforée (5) qui, conjointement avec une chemise (6) entourant la section respective pour recueillir de manière fonctionnelle du lactosérum sortant de la colonne de caillé (W), forme une section d'égouttage (a, b, c), chaque section d'égouttage étant munie d'au moins une conduite d'évacuation de lactosérum (8, 9, 10), **caractérisé en ce qu'**au moins une conduite d'évacuation de lactosérum (8, 9, 10) d'une section d'égouttage (a, b, c) est raccordée au bassin (3) pour fournir de manière fonctionnelle du lactosérum frais au bassin (3), lequel lactosérum frais est utilisé en tant que liquide de rinçage pour le bassin.

2. Appareil (30) selon la revendication 1, **caractérisé en ce que** le bassin (3) est muni d'une conduite d'évacuation de lactosérum (32) qui est raccordée à un réservoir collecteur de lactosérum (12).

3. Appareil (30) selon la revendication 1, **caractérisé en ce que** le bassin (3) est conçu également en tant que réservoir collecteur de lactosérum (12).

4. Appareil (30) selon l'une quelconque des revendications précédentes, **caractérisé en ce que** les conduites d'évacuation de lactosérum (8, 9, 10) des sections d'égouttage (a, b, c) raccordées au bassin (3) sont raccordées au bassin (3) par le biais d'une conduite commune (11).

5. Appareil (30) selon l'une quelconque des revendications précédentes, **caractérisé en ce que** les conduites d'évacuation de lactosérum raccordées au bassin sont raccordées au bassin par le biais de moyens de pompe.

6. Procédé pour faire fonctionner un appareil (30) de fabrication de fromage, lequel appareil comprend au moins une colonne d'égouttage (2) pour recevoir du caillé de fromage qui est placée sur un bassin (3), la colonne d'égouttage (2) étant munie d'un certain nombre de sections d'égouttage (a, b, c) pour égoutter le lactosérum provenant du caillé de fromage, **caractérisé en ce qu'**au moins une partie du lactosérum frais obtenu dans les sections d'égouttage (a, b, c) est fournie directement au bassin (3) en tant que liquide de rinçage.
